(19) Europäisches Patentamt
European Patent Office
Office européen des brevets

(11) **EP 2 136 239 B1**

(12) **FASCICULE DE BREVET EUROPEEN**

(45) Date de publication et mention
de la délivrance du brevet:
**08.12.2010 Bulletin 2010/49**

(51) Int Cl.:
***G02F 1/01*** *(2006.01)*  ***H01S 3/067*** *(2006.01)*
***H01S 3/23*** *(2006.01)*

(21) Numéro de dépôt: **09162756.2**

(22) Date de dépôt: **16.06.2009**

(54) **Dispositif laser comportant des moyens de mise en phase d'un grand nombre de sources coherentes**

Laservorrichtung, die Mittel zur Synchronisierung einer großen Anzahl von kohärenten Quellen umfasst

Laser device comprising means for phasing a large number of coherent sources

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **20.06.2008 FR 0803461**

(43) Date de publication de la demande:
**23.12.2009 Bulletin 2009/52**

(73) Titulaire: **THALES**
**92200 Neuilly-sur-Seine (FR)**

(72) Inventeurs:
• **Huignard, Jean-Pierre**
**75013 PARIS (FR)**
• **Bellanger, Cindy**
**91600 SAVIGNY SUR ORGE (FR)**
• **Brignon, Arnaud**
**92340 BOURG LA REINE (FR)**
• **Colineau, Joseph**
**91440 BURES SUR YVETTE (FR)**

(74) Mandataire: **Esselin, Sophie et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A- 6 061 170**

• **FAN T Y: "Laser Beam Combining for High-Power, High-Radiance Sources" IEEE JOURNAL OF SELECTED TOPICS IN QUANTUM ELECTRONICS, IEEE SERVICE CENTER, PISCATAWAY, NJ, US, vol. 11, no. 3, 1 mai 2005 (2005-05-01), pages 567-577, XP011140207 ISSN: 1077-260X**
• **DESFARGES-BERTHELEMOT ET AL: "Coherent combining of fibre lasers" COMPTES RENDUS - PHYSIQUE, ELSEVIER, PARIS, FR, vol. 7, no. 2, 1 mars 2006 (2006-03-01), pages 244-253, XP005435920 ISSN: 1631-0705**
• **BOURDON P ET AL: "Coherent beam combining of fiber amplifier arrays and application to laser beam propagation through turbulent atmosphere" PROCEEDINGS OF SPIE - THE INTERNATIONAL SOCIETY FOR OPTICAL ENGINEERING - FIBER LASERS V: TECHNOLOGY, SYSTEMS, AND APPLICATIONS 2008 SPIE US, vol. 6873, 2008, XP002514140**

## Description

Le domaine de l'invention est celui des sources laser de puissance utilisant un réseau de lasers fibrés et capable de fournir un gain significatif de l'énergie extraite. La montée en puissance et surtout en énergie des lasers à fibres constitue un enjeu majeur pour de nombreuses applications industrielles, scientifiques de type métrologie, lidar,... ou optroniques.

Un des facteurs limitant au niveau de la puissance générée en sortie de fibre est constitué par le faible diamètre de coeur de la fibre, dès lors que celle-ci est monomode et conduit à l'apparition des effets non-linéaires et/ou du seuil de dommage des amplificateurs.

Deux voies de recherche sont actuellement explorées dans les laboratoires et visent à la mise en parallèle d'un réseau linéaire ou matriciel de N ou $N^2$ fibres amplificatrices par l'intermédiaire des deux techniques suivantes.

Il s'agit du multiplexage en longueur d'onde et de la mise en phase cohérente des fibres constituant alors l'équivalent d'un réseau phasé, effectuée avec des modulateurs de phase unitaires individuels couplés à chacune des fibres.

Néanmoins pour un très grand nombre de fibres (typiquement supérieur à 100) la solution de recombinaison en longueur d'ondes a des limites et notamment en terme de contrôle spectral.

Dans ce contexte, la présente invention propose une source laser de puissance utilisant une technique de mise en phase cohérente et collective, compatible avec un grand nombre de fibres constituant un réseau fibré.

Plus précisément la présente invention a pour objet un dispositif laser comportant un ensemble de fibres amplificatrices délivrant un ensemble d'ondes optiques, alimenté par un oscillateur délivrant une onde signal **caractérisé en ce qu**'il comporte :

- une source cohérente émettant une onde cohérente sensiblement à la même longueur d'onde que l'onde signal et dont la direction de propagation est inclinée par rapport à la direction de propagation des ondes optiques issues des fibres amplificatrices ;

- des moyens pour faire interférer l'onde cohérente et les ondes optiques issues des fibres amplificatrices et générant un interférogramme constitué d'un réseau de franges ;

- des moyens de détection de l'interférogramme, le positionnement relatif des franges transcrivant une loi de phase entre fibres;

- un modulateur spatial ;

- des moyens de traitement et d'affichage de la loi de phase détectée sur le modulateur spatial, ledit modulateur spatial étant positionné de manière à pouvoir être lu par l'onde signal et ainsi générer une onde signal modulée en phase de manière sélective au niveau de chacune des fibres compensant les déphasages induits par lesdites fibres.

Ainsi, l'addition cohérente permet de réaliser un réseau phasé à une dimension ou à deux dimensions de N ou $N^2$ fibres assurant à la fois une puissance émise égale à N ou $N^2$ fois la puissance élémentaire d'une fibre, et une brillance de source correspondant à la dimension totale de la pupille émissive constituant le réseau.

Selon une variante de l'invention, les moyens de détection comprennent une matrice de détection du type dispositif à transfert de charge couramment dénommé CCD « Charge Couple Device » ou de type détecteur à transistor à effet de champ couramment dénommé CMOS « Complemantary Metal Oxyde Semiconductor ».

Selon une variante de l'invention, la matrice de détection comporte un nombre de pixels de l'ordre de quelques $10^6$ à quelques $10^7$ pixels, compatible avec une image de haute résolution spatiale.

Selon une variante de l'invention, le modulateur spatial de phase est de type écran à cristal liquide LCD.

Selon une variante de l'invention, le modulateur spatial de phase présente un temps de réponse de l'ordre d'une dizaine de millisecondes compatible avec une cadence image supérieure ou égale à environ 100Hz.

Selon une variante de l'invention, les moyens pour faire interférer ladite source cohérente et les faisceaux optiques comprennent un miroir.

Selon une variante de l'invention, les fibres sont munies de lentilles de collimation du type : réseaux de microlentilles individuelles ou ordonnées en réseau à une dimension 1 D ou à deux dimensions 2D.

Selon une variante de l'invention, les fibres amplificatrices sont à maintien de polarisation.

Selon une variante de l'invention, le dispositif laser comporte en outre des composants optiques classiques de mise en forme du faisceau, lames séparatrices ayant un taux de prélèvement adapté à la fonction recherchée, connecteurs fibres.

Selon une variante de l'invention, le dispositif comporte en outre des moyens de renvois dont l'axe optique est incliné par rapport à la direction de propagation des ondes issues des fibres amplificatrices, permettant de générer à partir de l'onde signal, une onde signal correctement orientée et comprenant une direction de propagation inclinée par rapport à celles des ondes issues des fibres amplificatrices.

Selon une variante de l'invention, l'angle entre la direction de propagation des ondes issues des fibres amplificatrices et celle de l'onde plane signal qui interfère est de l'ordre de quelques degrés pour détecter chaque période spatiale $\Lambda$ de la loi de phase avec un nombre de pixels suffisant.

Selon une variante de l'invention, la longueur d'onde de l'onde signal étant de l'ordre de 1 micron à 1,5 micron, chaque période spatiale est détectée par environ une dizaine de pixels et peut être de l'ordre de 50 à 100μm.

Selon une variante de l'invention, les moyens d'affichage et de traitement de la loi de phase comprennent en outre des moyens de filtrage en fréquence de manière à ne retenir que les fréquences spatiales correspondant aux franges d'interférences.

L'invention sera mieux comprise et d'autres avantages apparaîtront à la lecture de la description qui va suivre donnée à titre non limitatif et grâce aux figures annexées parmi lesquelles :

- la figure 1 illustre un premier exemple de dispositif laser de l'invention ;

- la figure 2 illustre le phénomène d'interférences des faisceaux optiques issus des fibres amplificatrices et du faisceau optique incliné ;

- la figure 3 illustre le phénomène de diffraction au niveau du modulateur spatial ;

- la figure 4 illustre une variante de dispositif laser compact selon l'invention.

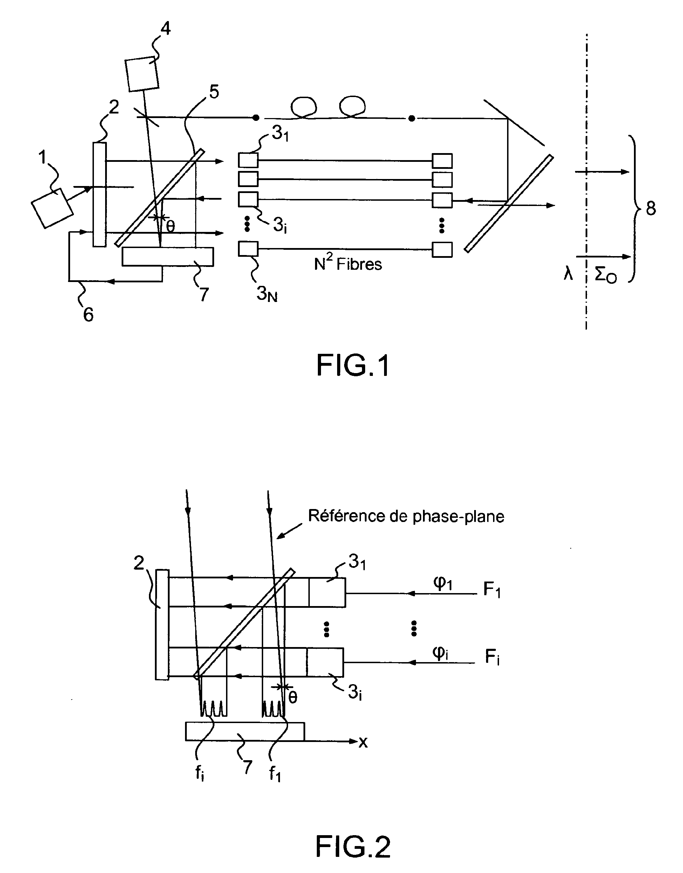

Le principe général de la présente invention réside dans l'intégration de moyens de mise en phase de sources cohérentes issues de fibres amplificatrices. Ce principe est illustré en figure 1 qui montre un premier exemple de dispositif laser selon l'invention ainsi que le positionnement relatif des composants de base de l'architecture optique. Ces composants sont principalement :

- des fibres amplificatrices 3 munies de lentilles de collimation du type : réseaux de microlentilles individuelles ou ordonnées en réseau à une dimension ou à deux dimensions. Les fibres sont de préférence à maintien de polarisation ;

- un modulateur spatial 2 à une dimension ou à deux dimensions adapté au contrôle de la phase de chaque fibre amplificatrice élémentaire. Le temps de réponse de ce modulateur spatial du type écran LCD doit être compatible avec une cadence image supérieure ou égale à 100Hz typiquement ;

- une matrice de détecteurs 7 du type CCD ou CMOS ayant un nombre de pixels compatible avec une image de haute résolution spatiale typiquement de quelques $10^6$ à quelques $10^7$ pixels ou plus ;

- des composants optiques classiques de mise en forme du faisceau non représentés, lames séparatrices ayant un taux de prélèvement adapté à la fonction recherchée, connecteurs fibres... ;

- des moyens d'affichage et de traitement du signal 6 pour la commande du modulateur spatial.

L'onde signal 1 issue d'un oscillateur non représenté alimente au travers d'un miroir sélectivement transparent les fibres amplificatrices 3, les ondes amplifiées issues desdites fibres sont réfléchies par le miroir 5.

Une source cohérente annexe 4 est transmise au travers du miroir 5. Elle présente une direction de propagation faisant un angle θ avec l'axe de propagation des ondes amplifiées issues des fibres amplificatrices de manière à pouvoir interférer avec celles-ci, une partie de ladite source cohérente étant prélevée pour venir sonder l'ensemble des fibres.

La phase du réseau de fibres peut ainsi être sondée par la source cohérente annexe 4 de très faible puissance, de longueur d'onde sensiblement égale à celle de l'oscillateur 1 qui génère une onde cohérente qui sert à l'injection du réseau de fibres amplificatrices.

La phase relative entre fibres est détectée par interférence d'une onde référence plane provenant de la source cohérente annexe 4 et des ondes planes issues des fibres amplificatrices.

Le résultat de ces interférences est un réseau de franges de même pas et dont la phase relative vaut $\varphi_i(x)$, recueilli par un détecteur 7 puis envoyé sur un modulateur spatial 2, à une dimension ou à deux dimensions.

Selon ce principe détaillé sur la figure 2, c'est le positionnement relatif des franges $f_1,...,f_i$ sur le détecteur qui traduit le déphasage entre fibres $F_1,..., F_i$. Si les phases évoluent, compte tenu des effets « lents » de température, contraintes, bruit acoustique... , les interférences sont détectées en temps réel à une cadence supérieure ou égale à 100 Hz.

L'angle entre la direction de propagation des ondes issues des fibres amplificatrices et celle de l'onde plane signal qui interfèrent est choisi faible (typiquement inférieur à 1 degré) pour détecter chaque période spatiale Λ (typiquement de l'ordre de 50μm) avec un nombre de pixels suffisant, par exemple moins de 10 pixels, correspondant à une taille du pixel élémentaire CCD de 5μm pour une valeur de Λ = 50μm. ou 100μm typiquement.

L'interférogramme détecté selon les principes montrés sur les figures 1 et 2 est inscrit sur le modulateur de phase à deux dimensions.

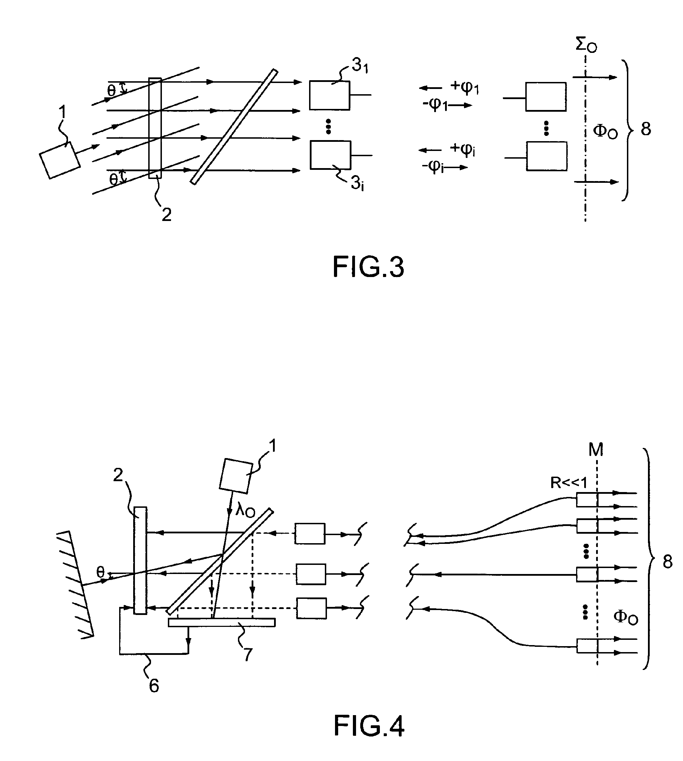

L'onde issue de l'oscillateur 1 est alors modulée spatialement et elle diffracte, dans les conditions de lecture de la figure 3, une onde dont la phase au niveau de chaque fibre vaut $-\varphi_i(x)$ . Cette loi de phase compense donc à chaque instant les déphasages induits par les fibres du réseau à deux dimensions d'amplificateurs, réalisant ainsi la fonction mise en phase au niveau de l'onde résultante 8.

Plus précisément la répartition spatiale de phase détectée après lecture CCD vaut :

$$\Phi(x) = \varphi_O + \delta\varphi_i \cos[Kx + \varphi_i(t)]$$

La loi de phase inscrite sur le LCD selon le schéma de lecture des figures 1 et 2 vaut :

$$\Phi(x) = \varphi_O + \delta\varphi_i \cos[Kx - \varphi_i(t)]$$

Après diffraction elle génère une onde dont la phase est $-\varphi_i(x)$.

L'oscillateur 1 est couplé par diffraction par le modulateur spatial à cristal liquide sur l'ensemble des fibres amplificatrices. Cette fonction est réalisée par un écran modulateur spatial ayant une résolution équivalente à celle de la matrice de détection et présentant pour assurer cette fonction au moins quelques $10^6$ à quelques $10^7$ pixels.

Ces ordres de grandeur sont parfaitement compatibles avec la technologie LCD affichant des images dites « télévision haute définition » couramment dénommé TVHD à la cadence de 100 Hz. Cet écran peut être considéré comme un élément dynamique diffractif dans le cadre de l'invention.

L'idée générale de la mise en phase proposée dans la présente invention consiste ainsi à effectuer en parallèle et à un instant donné une mesure de la phase relative entre les différentes fibres sur le détecteur CCD pour ensuite compenser en temps réel cet effet de déphasage relatif entre fibres du réseau par diffraction à partir de l'écran de phase LCD, petit et compatible avec la taille du pixel. L'interférogramme détecté est affiché sur le modulateur spatial selon le schéma de la figure 2. Dans ces conditions, le modulateur spatial de la phase diffracte une onde assurant la mise en phase de l'ensemble du réseau de fibres.

Selon une variante de l'invention, il est également possible de sonder à la longueur d'onde $\lambda$ la phase de chaque amplificateur par une très faible rétroréflexion de l'onde à l'extrémité de chaque fibre (double passage du faisceau sonde). Le détecteur reçoit un réseau d'interférence de la forme :

$$I_O \left(1 + \cos[Kx + 2\varphi_2(t)]\right).$$

Après traitement du signal issu de la matrice de détection de type CCD ou CMOS, on affiche sur le modulateur spatial LCD une loi de diffraction :

$$\Phi(x) = \varphi_O + \delta\varphi_i \cos[Kx - \varphi_i(t)].$$

Cette loi de phase diffracte dans les conditions identiques à celles illustrée en figure 2 et compense en simple passage le déphasage $\varphi_i(x)$ dû à chaque amplificateur.

L'invention est particulièrement bien adaptée dans le cadre de l'utilisation de fibres monomodes avec maintien de la polarisation.

Dans le cas où les fibres sont dépolarisantes, les principes mis en oeuvre et précédemment décrits sont compatibles avec le traitement simultané des deux composantes de polarisation issues d'un séparateur de polarisation.

Selon une variante de l'invention, on peut avantageusement intégrer un composant du type contrôleur de polarisation permettant pour chaque fibre amplificatrice de rétablir un état de polarisation linéaire et adapté à la diffraction par la matrice LCD. Il peut s'agir comme décrit dans la demande de brevet déposée par la demanderesse et publiée sous le numéro FR 2 907 547 concernant un système d'imagerie polarimétrique à matrice de lames d'onde programmables à base de matériau avec un tenseur électro-optique isotrope, d'un composant correspondant à un moyen d'analyse programmable d'une distribution de polarisation incidente

Exemples de réalisation d'un dispositif laser selon l'invention :

Le dispositif comprend une source d'onde signal de longueur d'onde typiquement de 1 $\mu$m ou 1.5 $\mu$m, l'angle $\theta$ entre les deux faisceaux interférant sur la matrice de détection est de l'ordre de 10mradian conduisant à une période spatiale de l'ordre de 100 $\mu$m.

Le réseau en deux dimensions de fibres monomodes amplificatrices peut typiquement être un réseau de 10x10, collimatées à chaque extrémité, par des microlentilles, les diamètres de faisceau étant de l'ordre de 1 mm à 2mm. Chaque faisceau élémentaire est recueilli par environ 200 pixels de matrice CCD et de matrice LCD.

Le dispositif peut également comprendre une matrice de type « LCOS » correspondant à une matrice à cristal liquide sur substrat en silicium et fonctionnant en réflexion, comportant typiquement $4 \times 10^6$ pixels.

Selon une variante de l'invention, le modulateur de phase peut également être de type « MOEMS » de terminologie anglo-saxonne : Micro-Opto-Electro-Mechanical Systems, offrant simultanément des fonctions mécaniques, électriques et optiques. Sous l'effet d'un champ électrique appliqué et par force électrostatique, certains éléments unitaires peuvent être rapprochés du substrat créant par la même une structure réseau. Typiquement ces éléments peuvent présenter des longueurs d'environ quelques dizaines de microns pour des largeurs d'environ quelques microns. On réalise ainsi des réseaux de micro-miroirs capables de réfléchir ou non le faisceau lumineux, pilotables électriquement et permettant par la même un contrôle binaire ou analogique de la phase.

On obtient une efficacité de diffraction du modulateur de phase maximum d'environ 34% et typiquement supérieure à 20 % compte tenu du fonctionnement proche IR.

Le filtrage des ordres de diffraction est réalisé par le coeur de chaque fibre. Le contrôle de la direction d'émission est rendu possible en introduisant une loi de phase linéaire superposée à la loi de compensation.

Selon une variante de l'invention illustrée en figure 4, la pupille d'émission peut être lacunaire, grâce à la présence de fibres réparties de manière plus ou moins denses dans l'espace avec des absences de fibres locales et une pupille plus ou moins distribuée. Il est ainsi possible à partir d'une surface d'environ 1 cm$^2$ au niveau de la sortie des fibres de créer une source très étendue d'environ 1 m$^2$ sans avoir nécessairement besoin d'une grande quantité de fibres constituant le réseau de fibres.

Le mode de réalisation est compatible avec un fonctionnement en mode impulsionnel de la source.

Il est à noter que la longueur d'onde du faisceau de sonde qui sert à la mesure de phase de chaque fibre pouvant être légèrement différente de la longueur d'onde d'émission de la source, on peut afficher sur la matrice de modulation de phase, une loi de phase calculée tenant compte de cet écart de longueur d'onde. Typiquement si la source cohérente émet à une longueur d'onde $\lambda$' proche de $\lambda$ correspondant à la longueur d'onde de l'oscillateur, la phase à afficher correspond à la phase mesurée multipliée par un paramètre $\lambda'/\lambda$ .

Dans ce procédé, le traitement du signal est simple et rapide, voire inexistant, puisque l'on utilise l'interférogramme détecté par la matrice par exemple de type CCD, que l'on affiche directement sur le modulateur de phase pour faire une compensation des écarts de phase des diverses pupilles.

Cependant, le signal détecté est entaché de composantes basses fréquences, liées au manque d'uniformité des faisceaux, ainsi que d'autres artéfacts, fréquemment rencontrés lorsque l'on détecte des figures d'interférences.

Il peut donc être utile d'appliquer au signal détecté, un filtrage permettant de ne retenir que les fréquences spatiales correspondant aux franges d'interférences. On supprime les composantes basse fréquence du spectre de l'image, et on les remplace par une composante moyenne choisie de manière à utiliser au mieux la dynamique du modulateur spatial.

Dans le dispositif précédent, on se contente d'appliquer au faisceau, un déphasage opposé à celui que l'on a mesuré. Il s'agit donc d'une compensation à priori dénommée couramment "feed-forward". Celle-ci ne prend en compte ni les erreurs de mesure (non-planéité de la référence, non-linéarités du détecteur), ni les défauts du modulateur spatial.

Il est néanmoins possible de corriger localement la phase de l'interférogramme détecté avant de l'appliquer sur le modulateur pour la compensation. Ceci s'effectue très simplement dans l'espace de Fourier, par multiplication de la Transformée de Fourier du signal détecté par une matrice complexe représentant la correction de phase à appliquer pour chaque sous-pupille. Cette opération peut avantageusement être combinée à l'opération de filtrage présentée ci-dessus, car les deux traitements consistent simplement en une multiplication dans l'espace des transformées de Fourier.

La matrice de correction de phase peut être élaborée lors d'une opération de calibration de la source multi-pupille.

On peut également la faire évoluer en temps réel (pour s'adapter par exemple aux déformations mécaniques, aux effets de la température, etc ..., qui ne seraient pas pris en compte dans le contrôle direct décrit ci-dessus).

Dans ce cas, il est intéressant de prévoir un dispositif d'observation des erreurs résiduelles du front d'onde de la source multi-pupille, afin de réaliser une rétro-action « feed-back » par modification de la matrice de correction de phase. La bande passante de cette boucle externe est choisie en fonction de la constante de temps des erreurs résiduelles.

## Revendications

**1.** Dispositif laser comportant un ensemble de fibres amplificatrices (3) délivrant un ensemble d'ondes optiques, alimenté par un oscillateur (1) délivrant une onde signal **caractérisé en ce qu'**il comporte :

- une source cohérente (4) émettant une onde cohérente à une longueur d'onde sensiblement égale à celle de l'onde signal et dont la direction de propagation est inclinée par rapport à la direction de propagation des ondes optiques issues des fibres amplificatrices ;
- des moyens pour faire interférer l'onde cohérente et les ondes optiques issues des fibres amplificatrices et générant un interférogramme constitué d'un réseau de franges ;
- des moyens de détection de l'interférogramme (7), le positionnement relatif des franges transcrivant une loi de phase entre fibres;
- un modulateur spatial de phase (2) ;
- des moyens d'affichage et de traitement (6) de la loi de phase détectée sur le modulateur spatial, ledit modulateur spatial étant positionné de manière à pouvoir être lu par l'onde signal et ainsi générer une onde signal modulée en phase de manière sélective au niveau de chacune des fibres compensant les déphasages induits par lesdites fibres.

**2.** Dispositif laser selon la revendication 1, **caractérisé en ce que** les moyens de détection comprennent une matrice du type CCD ou CMOS.

**3.** Dispositif laser selon la revendication 2, **caractérisé**

**en ce que** la matrice comporte un nombre de pixels de l'ordre de quelques $10^6$ à quelques $10^7$ pixels, compatible avec une image de haute résolution spatiale.

4. Dispositif laser selon l'une des revendications 1 à 3, **caractérisé en ce que** le modulateur spatial est de type écran LCD.

5. Dispositif laser selon l'une des revendications 1 à 3, **caractérisé en ce que** le modulateur spatial est à base de composants de type MOEMS.

6. Dispositif laser selon l'une des revendications 1 à 3, **caractérisé en ce que** le modulateur spatial présente un temps de réponse de l'ordre de 10 millisecondes compatible avec une cadence image supérieure ou égale à 100Hz typiquement.

7. Dispositif laser selon l'une des revendications 1 à 6, **caractérisé en ce que** les moyens pour faire interférer ladite source cohérente et les faisceaux optiques comprennent un miroir.

8. Dispositif laser selon l'une des revendications 1 à 7, **caractérisé en ce que** les fibres sont munies de lentilles de collimation du type : réseaux de microlentilles individuelles ou ordonnées en réseau à une dimension ou à deux dimensions.

9. Dispositif laser selon l'une des revendications 1 à 8, **caractérisé en ce que** les fibres amplificatrices sont à maintien de polarisation.

10. Dispositif laser selon l'une des revendications 1 à 9, **caractérisé en ce qu'**il comporte en outre des composants optiques classiques de mise en forme du faisceau : lames séparatrices ayant un taux de prélèvement adapté à la fonction recherchée, connecteurs fibres.

11. Dispositif laser selon l'une des revendications 1 à 10, **caractérisé en ce que** la source cohérente est l'oscillateur et qu'il comporte en outre des moyens de renvois dont l'axe optique est incliné par rapport à la direction des faisceaux optiques des fibres amplificatrices, permettant de générer à partir de l'onde signal, le faisceau optique de direction inclinée par rapport à celles des faisceaux optiques des fibres amplificatrices.

12. Dispositif laser selon l'une des revendications 1 à 11, **caractérisé en ce que** l'angle entre la direction de propagation des ondes issues des fibres amplificatrices et celle de l'onde plane signal qui interfèrent est de l'ordre de quelques degrés pour détecter chaque période spatiale $\Lambda$ de la loi de phase avec un nombre de pixels suffisant.

13. Dispositif laser selon la revendication 12, **caractérisé en ce que** la longueur d'onde de l'onde signal étant de l'ordre de 1 micron à 1,5 micron, chaque période spatiale étant de l'ordre de 50 à 100$\mu$m est détectée par environ une dizaine de pixels.

14. Dispositif laser selon l'une des revendications 1 à 13, **caractérisé en ce que** les moyens d'affichage et de traitement de la loi de phase comprennent en outre des moyens de filtrage en fréquence de manière à ne retenir que les fréquences spatiales correspondant aux franges d'interférences.

**Claims**

1. A laser device comprising a set of amplifying fibres (3) providing a set of optical waves, supplied by an oscillator (1) which provides a wave signal, **characterised in that** it comprises:

   - a coherent source (4) emitting a coherent wave at a wavelength essentially equal to that of the signal wave, the propagation direction of which is inclined relative to the propagation direction of the optical waves originating from the amplifying fibres;
   - means of making the coherent wave interfere with the optical waves originating from the amplifying fibres and generating an interferogram constituted by an array of edges;
   - means of detecting the interferogram (7), the relative positioning of the edges transcribing a phase rule between fibres;
   - a spatial phase modulator (2);
   - means of displaying and processing (6) the phase rule detected on the spatial modulator, said spatial modulator being positioned such that it can be read by the signal wave and thus generate a phase modulated signal wave selectively on each of the amplifying fibres compensating the phase shifting caused by said fibres.

2. The laser device according to claim 1, **characterised in that** the detection means include a CCD or CMOS type matrix.

3. The laser device according to claim 2, **characterised in that** the matrix includes a number of pixels of the order of several $10^6$ to several $10^7$ pixels, compatible with a high resolution spatial image.

4. The laser device according to any one of claims 1 to 3, **characterised in that** the spatial modulator is of the LCD screen type.

5. The laser device according to any one of claims 1 to 3, **characterised in that** the spatial modulator is based on MOEMS type components.

6.  The laser device according to any one of claims 1 to 3, **characterised in that** the spatial modulator has a response time of the order of 10 milliseconds, which is compatible with an image rate that is typically greater than or equal to 100Hz.

7.  The laser device according to any one of claims 1 to 6, **characterised in that** the means for making it interfere with said coherent source and the optical beams include a mirror.

8.  The laser device according to any one of claims 1 to 7, **characterised in that** the fibres are provided with collimation lenses of the following type: microlense arrays which are either individual or arranged in a one dimension or two dimension array.

9.  The laser device according to any one of claims 1 to 8, **characterised in that** the amplifying fibres are polarisation retention amplifying fibres.

10. The laser device according to any one of claims 1 to 9, **characterised in that** it further includes conventional optical components for beam formation: separating plates having a sampling rate that is adapted to the desired function, fibre connectors.

11. The laser device according to any one of claims 1 to 10, **characterised in that** the coherent source is the oscillator and **in that** it further includes deflection means wherein the optical axis is inclined relative to the direction of the optical beams of the amplifying fibres, so that the optical beam can be generated from the signal wave along a direction inclined relative to the direction of the optical beams of the amplifying fibres.

12. The laser device according to any one of claims 1 to 11, **characterised in that** the angle between the propagation direction of the waves originating from the amplifying fibres and that of the interfering plane signal wave is of the order of several degrees in order to detect each spatial period $\Lambda$ of the phase rule with a sufficient number of pixels.

13. The device according to claim 12, **characterised in that** the wavelength of the signal wave is of the order of 1 micron to 1.5 microns, each spatial period being of the order of 50 to 100$\mu$m and is detected by approximately ten pixels.

14. The device according to any one of claims 1 to 13, **characterised in that** the means of displaying and processing the phase rule further include means for frequency filtering so as to retain only the spatial frequencies that correspond to the interference edges.

**Patentansprüche**

1.  Laservorrichtung, die einen Satz Verstärkungsfasern (3) umfasst, die einen Satz optische Wellen liefern, der von einem eine Signalwelle liefernden Oszillator (1) zugeführt wird, **dadurch gekennzeichnet, dass** sie Folgendes umfasst:

    - eine kohärente Quelle (4), die eine kohärente Welle mit einer Wellenlänge emittiert, die im Wesentlichen gleich der der Signalwelle ist und deren Ausbreitungsrichtung relativ zur Ausbreitungsrichtung der von den Verstärkungsfasern stammenden optischen Wellen geneigt ist;
    - Mittel, um zu bewirken, dass die kohärente Quelle mit den von den Verstärkungsfasern stammenden optischen Wellen interferieren, und die eine Interferogramm bestehend aus einem Rändernetzwerk erzeugen;
    - Mittel zum Erfassen des Interferogramms (7), wobei die relative Positionierung der Ränder eine Phasenregel zwischen Fasern beschreibt;
    - einen räumlichen Phasenmodulator (2);
    - Mittel zum Anzeigen und Verarbeiten (6) der auf dem räumlichen Modulator erfassten Phasenregel, wobei der räumliche Modulator so positioniert ist, dass er von der Signalwelle gelesen werden kann, so dass eine phasenmodulierte Signalwelle selektiv auf jeder der Fasern erzeugt werden kann, die die von den Fasern verursachten Phasenverschiebungen ausgleicht.

2.  Laservorrichtung nach Anspruch 1, **dadurch gekennzeichnet, dass** die Erfassungsmittel eine Matrix des CCD- oder CMOS-Typs umfassen.

3.  Laservorrichtung nach Anspruch 2, **dadurch gekennzeichnet, dass** die Matrix eine Pixelzahl in der Größenordnung von mehreren $10^6$ bis zu mehreren $10^7$ Pixeln umfasst, die mit einem räumlichen Bild hoher Auslösung kompatibel ist.

4.  Laservorrichtung nach einem der Ansprüche 1 bis 3, **dadurch gekennzeichnet, dass** der räumliche Modulator vom LCD-Bildschirmtyp ist.

5.  Laservorrichtung nach einem der Ansprüche 1 bis 3, **dadurch gekennzeichnet, dass** der räumliche Modulator auf Komponenten des MOEMS-Typs basiert.

6.  Laservorrichtung nach einem der Ansprüche 1 bis 3, **dadurch gekennzeichnet, dass** der räumliche Modulator eine Ansprechzeit in der Größenordnung von 10 Millisekunden hat, die mit einer Bildrate kompatibel ist, die typischerweise gleich oder höher als 100 Hz ist.

7. Laservorrichtung nach einem der Ansprüche 1 bis 6, **dadurch gekennzeichnet, dass** die Mittel zum Bewirken von Interferenzen mit der kohärenten Quelle und den optischen Strahlen einen Spiegel umfassen.

8. Laservorrichtung nach einem der Ansprüche 1 bis 7, **dadurch gekennzeichnet, dass** die Fasern mit Kollimationslinsen des folgenden Typs ausgestattet sind: Mikrolinsenarrays entweder individuell oder in einer eindimensionalen oder einer zweidimensionalen Array angeordnet.

9. Laservorrichtung nach einem der Ansprüche 1 bis 8, **dadurch gekennzeichnet, dass** die Verstärkungsfasern Polarisationshalteverstärkungsfasern sind.

10. Laservorrichtung nach einem der Ansprüche 1 bis 9, **dadurch gekennzeichnet, dass** sie ferner herkömmliche optische Komponenten zur Strahlbildung umfasst: Trennplatten mit einer Abtastrate, die an die gewünschte Funktion angepasst ist, Faserverbinder.

11. Laservorrichtung nach einem der Ansprüche 1 bis 10, **dadurch gekennzeichnet, dass** die kohärente Quelle der Oszillator ist und dass sie ferner Ablenkmittel umfasst, wobei die optische Achse relativ zur Richtung der optischen Strahlen der Verstärkungsfasern geneigt ist, so dass von der Signalwelle der optische Strahl entlang einer Richtung erzeugt werden kann, die relativ zur Richtung der optischen Strahlen der Verstärkungsfasern geneigt ist.

12. Laservorrichtung nach einem der Ansprüche 1 bis 11, **dadurch gekennzeichnet, dass** der Winkel zwischen der Ausbreitungsrichtung der von den Verstärkungsfasern stammenden Wellen und der der interferierenden ebenen Signalwelle in der Größenordnung von mehreren Grad ist, um jede Raumperiode $\Lambda$ der Phasenregel mit einer ausreichenden Anzahl von Pixeln zu erfassen.

13. Laservorrichtung nach Anspruch 12, **dadurch gekennzeichnet, dass** die Wellenlänge der Signalwelle in der Größenordnung von 1 Mikron bis 1,5 Mikron liegt, wobei jede Raumperiode in der Größenordnung von 50 bis 100 $\mu$m ist und von ungefähr zehn Pixeln erfasst wird.

14. Laservorrichtung nach einem der Ansprüche 1 bis 13, **dadurch gekennzeichnet, dass** das Mittel zum Anzeigen und Verarbeiten der Phasenregel ferner Mittel zum Frequenzfiltern umfasst, um nur die räumlichen Frequenzen zu behalten, die den Interferenzrändern entsprechen.

FIG.1

FIG.2

FIG.3

FIG.4

**RÉFÉRENCES CITÉES DANS LA DESCRIPTION**

**Documents brevets cités dans la description**

- FR 2907547